# FASCICULE DE BREVET EUROPEEN

(11) **EP 3 877 223 B1**
(45) Date de publication et mention de la délivrance du brevet: **05.07.2023**
(21) Numéro de dépôt: 19818210.7
(22) Date de dépôt: 04.11.2019
(51) Int. Cl.: B60T 5/00, F16D 65/00, B60T 17/00

(54) **SYSTÈME D'ASPIRATION DES PARTICULES DE FREINAGE À ANTICIPATION DE COMMANDE**
SYSTEM ZUM ABSAUGEN VON BREMSPARTIKELN MIT PRÄEMPTIVEM VORGANG
SYSTEM FOR VACUUMING BRAKING PARTICLES WITH PRE-EMPTIVE OPERATION

(30) Priorité: 08.11.2018 FR 1860305
(43) Date de publication de la demande: 15.09.2021
(73) Titulaire: Tallano Technologie, 75015 Paris (FR)
(72) Inventeur: ADAMCZAK, Loïc, 92100 BOULOGNE BILLANCOURT (FR); LE BOULAIRE, Thibaut, 92100 BOULOGNE BILLANCOURT (FR)
(74) Mandataire: Plasseraud IP
(86) Numéro de dépôt international: PCT/FR2019/052610
(87) Numéro de publication internationale: WO 2020/094964

(56) Documents cités:
- DE-A1- 4 240 873
- DE-A1- 19 643 869
- DE-A1-102011 111 594
- DE-A1-102016 117 778
- DE-C2- 4 240 873
- DE-C2- 19 643 869
- GB-A- 2 499 821
- GB-A- 2 533 476
- JP-A- 2012 081 931
- US-A1- 2017 198 772

## Description

### Domaine technique

L'invention se rapporte aux systèmes d'aspiration des particules de freinage dans des systèmes de freinage à friction. De tels systèmes de freinage à friction peuvent équiper des véhicules routiers ou ferroviaires, sans exclure des machines stationnaires comme des éoliennes ou des machines industrielles.

### Contexte et Art Antérieur

Dans de tels systèmes, comme par exemple décrit dans le document DE4240873, il est prévu une turbine d'aspiration et un filtre de collecte des particules. Les particules émanant de l'abrasion sont ainsi progressivement accumulées dans le filtre de collecte. Des systèmes similaires sont décrits dans le DE19643869 et dans le US2017198772.

La solution raisonnable conventionnelle est de n'activer la turbine d'aspiration que lorsque le freinage à friction est effectivement activé, par le conducteur ou par un système du véhicule.

Toutefois, les inventeurs ont remarqué que le temps requis pour établir la dépression souhaitée dans le conduit et la bouche d'aspiration n'était pas négligeable et que par conséquent, au tout début de la phase de freinage, la dépression pouvait être encore insuffisante pour capter correctement les particules de freinage.

Autrement dit, si on active la turbine au moment où le freinage à friction commence, la dépression peut parfois mettre trop de temps pour s'établir et le taux de captation n'est pas optimal. Par ailleurs, une commande permanente de la turbine n'est pas non plus souhaitable, au regard de la consommation électrique du moteur de la turbine et du bruit généré par le fonctionnement de la turbine.

La présente invention a pour objet de proposer une solution améliorée au regard de la performance de captation en tout début de phase de freinage à friction.

### Résumé de l'invention

A cet effet, il est proposé un système d'aspiration des particules de freinage d'un système de freinage à friction de véhicule, dans un véhicule hybride ou électrique, le système d'aspiration comprenant :
au moins une source de dépression (par exemple une turbine ou un autre moyen), au moins une bouche d'aspiration reliée par un circuit pneumatique à la source de dépression, une unité de commande configurée pour commander la source de dépression,
caractérisé en ce que le système d'aspiration comprend en outre un flux d'informations issu d'un calculateur de commande d'un moteur-générateur d'un dispositif de traction-freinage du véhicule,
et dans lequel l'unité de commande est configurée pour piloter la source de dépression de manière anticipée par rapport à l'activation effective du freinage à friction, l'unité de commande pilotant la source de dépression au moins en fonction de l'activation d'un freinage électromagnétique.

Grâce à ces dispositions, dans le cas d'un véhicule électrique ou hybride, où généralement une phase de freinage électromagnétique à récupération d'énergie précède une phase de freinage à friction dissipatif, l'information de déclenchement du freinage électromagnétique est avantageusement utilisée pour initialiser la phase d'aspiration du système d'aspiration par anticipation par rapport à la phase de freinage à friction qui généralement commence ultérieurement, selon les cas, de quelques centaines de millisecondes à quelques secondes après le début du freinage électromagnétique.

Ici on désigne par « véhicule hybride » un véhicule comprenant une chaîne de traction avec à la fois un moteur thermique et un moteur électrique. Dans le présent document, le terme « véhicule hybride » recouvre l'ensemble des solutions disponibles pouvant être qualifié d'hybrides, de « micro hybrid » à « full hybrid », selon le niveau de puissance électrique disponible et selon le niveau d'autonomie disponible.

On entend ici par « véhicule électrique » un véhicule à zéro émission issue de combustion, c'est-à-dire sans moteur thermique.

Par « bouche d'aspiration», il faut comprendre ici une zone de captation primaire des particules, par exemple une rainure ménagée dans le matériau de friction ou une fente à proximité immédiate d'au moins une bordure du matériau de friction.

Les particules sont issues d'un matériau de friction, qui fait typiquement partie d'une plaquette de frein ou d'un organe équivalent.

Par « source de dépression », il faut comprendre ici soit une turbine spécifique à la fonction d'aspiration de particules de freinage, soit une source de dépression préexistante sur le véhicule que l'on met à profit de manière sélective pour aspirer les particules vers un filtre de collecte.

En outre, le système peut comprendre au moins un filtre (2) pour collecter les particules aspirées.

En outre, le circuit pneumatique peut comprendre au moins un premier conduit (3) reliant la bouche d'aspiration au filtre (2). Le premier conduit se situe en aval de la bouche d'aspiration sur le chemin des particules qui va de la bouche d'aspiration vers le filtre.

Selon une disposition avantageuse, le filtre (2) est interposé entre le premier conduit (3) et la source de dépression (1). La source de dépression aspire les particules au travers du filtre qui se trouve alors en dépression par rapport à la pression ambiante extérieure.

Selon une disposition alternative inversée, c'est la source de dépression qui est interposée entre le premier conduit et le filtre, auquel cas on aspire les particules puis on les souffle dans le filtre (filtre en surpression).

Dans divers modes de réalisation de l'invention concernant le système, on peut éventuellement avoir recours en outre à l'une et/ou à l'autre des dispositions suivantes, prises isolément ou en combinaison.

Selon une option préférentielle, la source de dépression est formée par une turbine entrainée par un moteur électrique. Ceci forme une solution indépendante de tout autre système pneumatique du véhicule, en outre cette solution bénéficie d'une grande souplesse de pilotage, on peut commander la turbine notamment en tout ou rien ou selon une vitesse de rotation quelconque.

Selon une option alternative, la source de dépression est formée par une source de dépression préexistante sur le véhicule, notamment pour le cas du domaine automobile une source de dépression induite par le fonctionnement du moteur du véhicule par exemple en dérivation de l'admission d'air, ou bien en autre exemple par l'utilisation d'un effet Venturi sur un flux de gaz sortant par exemple les gaz d'échappement. Pour le cas du domaine ferroviaire, la source de dépression peut être dérivée de l'équipement pneumatique de freinage ou d'un autre équipement auxiliaire du véhicule ferroviaire.

Selon une option, le système d'aspiration comprend en outre un flux d'informations issu d'un calculateur de freinage électrodynamique, et l'unité de commande est configurée pour piloter la source de dépression en fonction de l'activation d'un freinage électrodynamique. Moyennant quoi, en plus de la prise en compte du freinage électromagnétique, le système peut prendre en compte un autre système de freinage de type électrodynamique, par exemple un ralentisseur (système que l'on trouve fréquemment sur des véhicules poids-lourds).

Selon une option, le système comprend un filtre et une turbine centralisés, reliés à quatre ou plus bouches d'aspiration. Moyennant quoi, le coût de la solution complète est optimisé. Même avec des longueurs de conduite substantielles et un volume interne non négligeable dans cette configuration, l'anticipation proposée permet de générer la dépression dans les conduites suffisamment tôt pour optimiser la captation des particules.

Selon une option, le système comprend un filtre et une turbine décentralisés, à savoir pour chaque bouche d'aspiration ou couple de bouches d'aspiration. Moyennant quoi, on a un système distribué et une panne sur une partie n'a pas d'impact sur le bon fonctionnement des autres parties du système. On peut même avoir un filtre, une turbine et une bouche d'aspiration par plaquette, et/ou une bouche d'aspiration par côté de disque.

Selon une option, l'unité de commande est configurée pour piloter la source de dépression en fonction d'un lever rapide de pied de la pédale d'accélérateur. Grâce à quoi, le système d'aspiration des particules de freinage peut être mis en route avant même que le conducteur n'appuie sur la pédale de frein déclenchant un dispositif de freinage électromagnétique ou électrodynamique, ou bien le système d'aspiration des particules de freinage peut être mis en route pour anticiper une phase de freinage d'urgence pour laquelle l'intervention du freinage à friction doit être faite le plus tôt possible.

Selon une option, il est prévu au moins un second conduit reliant le filtre à la source de dépression. Avantageusement, même avec des longueurs de tuyaux importantes entre la source de dépression (la turbine ou autre) et les bouches d'aspiration (avec un volume d'air significatif), l'astuce de l'anticipation permet d'avoir une dépression suffisante au moment où le freinage à friction commence.

La présente invention concerne aussi un procédé pour piloter un système d'aspiration des particules de freinage à friction d'un système de freinage de véhicule, dans un véhicule hybride ou électrique, le système d'aspiration comprenant:
au moins une source de dépression (par exemple une turbine ou autre moyen), au moins une bouche d'aspiration (83), au moins un circuit pneumatique reliant la bouche d'aspiration à la source de dépression, et une unité de commande (6) configurée pour mettre en oevure les étapes:
- recevoir une ou plusieurs informations émanant d'un calculateur de commande d'un moteur-générateur d'un dispositif de traction-freinage du véhicule,
- établir des conditions de commande anticipée de la source de dépression,
- piloter la source de dépression en fonction des conditions de commande anticipée.

Grâce à ces dispositions, dans le cas d'un véhicule électrique ou hybride, où généralement une phase de freinage électromagnétique à récupération d'énergie précède une phase de freinage à friction dissipatif, l'information de déclenchement du freinage électromagnétique est avantageusement utilisée pour initialiser la phase d'aspiration du système d'aspiration par anticipation par rapport à la phase de freinage à friction qui généralement commence ultérieurement, selon les cas, de quelques centaines de millisecondes à quelques secondes après le début du freinage électromagnétique.

Dans divers modes de réalisation de l'invention concernant le procédé, on peut éventuellement avoir recours en outre à l'une et/ou à l'autre des dispositions suivantes, prises isolément ou en combinaison.

Selon une option, l'unité de commande est en outre configurée pour recevoir une ou plusieurs informations émanant d'un système de commande de freinage à friction du véhicule. Ainsi, même si l'information correspondant à une anticipation n'est pas reçue, alors le système d'aspiration est tout de même mis en route dès que l'information de l'activation du freinage à friction est présente ou reçue. Par exemple, dans le cas d'un freinage d'urgence, le freinage à friction est appliqué dès que possible et l'information d'anticipation du freinage électromagnétique n'arrive pas avant celle du freinage à friction.

Selon une option, l'unité de commande est en outre configurée pour prendre en compte un lever rapide de pied de la pédale d'accélérateur. Ceci permet par exemple d'anticiper une phase de freinage d'urgence pour laquelle l'intervention du freinage à friction doit être faite le plus tôt possible.

Selon une option, l'unité de commande est en outre configurée pour prendre en compte des signaux de commande pilotant les injecteurs de carburant du moteur thermique. Grâce à quoi, une diminution du temps de commande des injecteurs reflète une probabilité substantielle d'un freinage subséquent et on peut anticiper l'activation du système d'aspiration des particules de freinage.

Selon une option, l'unité de commande est en outre configurée pour prendre en compte une cartographie contenant des zones à probabilité de freinage élevée, et/ou des zones de descente longue (col de montagne). On met ainsi à profit une source d'information supplémentaire pour participer à l'anticipation du besoin d'aspirer les particules de freinage.

Selon une option, l'unité de commande est en outre configurée pour prendre en compte des informations en provenance d'un système de reconnaissance d'environnement et de dangers, qui peut comprendre des caméras, des lidars, notamment à fonctionnalité de détections d'obstacles. Ceci participe à l'anticipation du besoin d'aspirer les particules de freinage.

Selon une option, l'unité de commande est en outre configurée pour recevoir une information de vitesse courante du véhicule, de manière à pouvoir diminuer ou interrompre le pilotage de la turbine dans le cas où le véhicule est à vitesse nulle. Ceci permet d'affiner la logique de commande et d'éviter les phases d'aspiration inutiles, par exemple lorsque le véhicule est au feu rouge avec le pied sur le frein.

Selon une option, l'unité de commande est en outre configurée pour prolonger l'activation du système d'aspiration d'une temporisation prédéterminée après l'un des événements parmi le relâchement du frein à friction ou l'arrêt du véhicule vitesse (vitesse nulle maintenue). Cette prolongation temporisée permet d'optimiser encore le taux de captation de particules.

La présente invention concerne aussi un procédé pour piloter un système d'aspiration des particules de freinage à friction d'un système de freinage de véhicule, dans un véhicule à motorisation thermique conventionnelle, le système d'aspiration comprenant au moins une source de dépression, au moins une bouche d'aspiration (83), au moins un circuit pneumatique reliant la bouche d'aspiration à la source de dépression, et une unité de commande (6) configurée pour déterminer des conditions de commande anticipée de la source de dépression, les conditions de commande anticipée comprenant l'une et/ou l'autre des conditions suivantes : présence du véhicule dans une zone de cartographie contenant des zones à probabilité de freinage élevée, présence du véhicule sur un segment de route de descente longue.

Les conditions de commande anticipée ci- dessus peuvent en outre comprendre un lever de pied rapide sur la pédale d'accélérateur, changement à la baisse des signaux de commande pilotant les injecteurs de carburant du moteur thermique.

Les conditions de commande anticipée ci- dessus peuvent en outre comprendre des informations de danger en provenance d'un système de reconnaissance d'environnement, lequel peut comprendre des caméras, des lidars, notamment à fonctionnalité de détections d'obstacles.

La présente invention concerne aussi un système pour véhicule à motorisation thermique conventionnelle configuré pour mettre en oeuvre le procédé décrit dans les paragraphes précédents.

### Description des figures

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :
- La figure 1 représente une vue de profil d'un exemple d'un organe de freinage à friction,
- La figure 2 représente un diagramme de principe d'un système d'aspiration des particules de freinage localisé pour une roue ou un essieu,
- La figure 3 représente un diagramme de principe d'un système d'aspiration des particules de freinage centralisé plusieurs roues ou essieux,
- La figure 4 représente un schéma de principe fonctionnel système d'aspiration des particules de freinage, dans un contexte automobile,
- La figure 5 représente un schéma de principe fonctionnel système d'aspiration des particules de freinage, dans un contexte de matériel ferroviaire,
   La figure 6 représente des chronogrammes illustrant au moins une fonctionnalité du système,
- La figure 7 donne une illustration physique des composants du système d'aspiration des particules de freinage.

### Description détaillée

Sur les différentes figures, les mêmes références désignent des éléments identiques ou similaires. Pour des raisons de clarté de l'exposé, certains éléments ne sont pas nécessairement représentés à l'échelle.

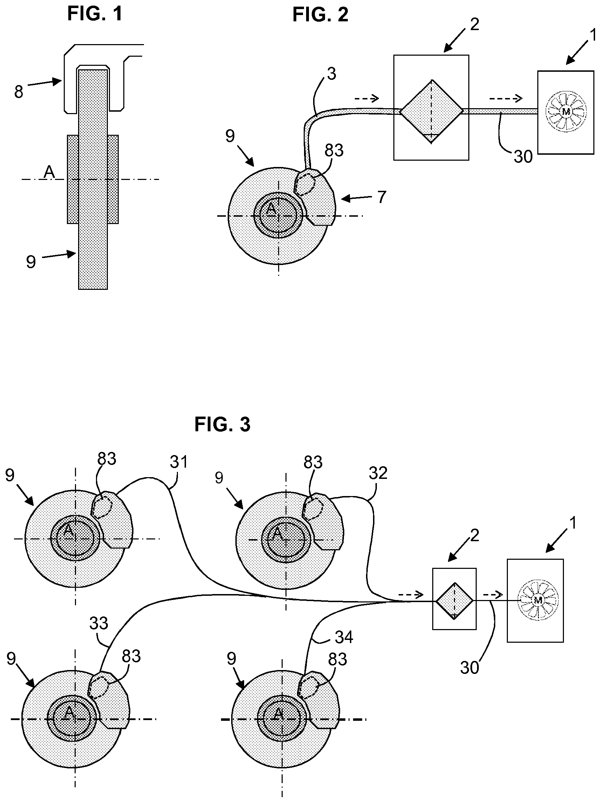

La figure 1 représente schématiquement un organe de freinage à friction. Dans le cas illustré, on a représenté un disque de frein **9** destiné à être rendu solidaire en rotation d'une roue (voire un essieu pour du matériel ferroviaire). Le disque **9** tourne autour de l'axe **A.** Selon l'art connu, on dispose un étrier **7** à cheval sur le disque et monté sur un support d'étrier. De plus, l'étrier comprend un piston configuré pour agir sur des patins de friction afin de prendre en sandwich le disque. Les patins de friction ou garnitures (non représentés) sont montés sur des plaquettes ou des semelles, tout ceci étant connu par ailleurs en soi et non décrit ici en détail.

Bien que l'on ait représenté un schéma de frein à disque, la présente invention convient également pour des freins à tambour, voire des systèmes de frein par patins appliqués directement sur la jante de roue.

À l'endroit des patins à friction, il est prévu un dispositif de captation **8** des particules qui s'en échappent. Plus particulièrement, on peut prévoir une bouche d'aspiration **83** pour chacun des patins à friction. On peut par exemple trouver un exemple dans le document FR3057040 du présent déposant, où les particules sont captées dans des rainures ménagées dans le matériau de friction. La bouche d'aspiration peut être formée par la (ou les) rainure(s) elle-même raccordée à un trou traversant dans la semelle de la garniture de friction et en communication avec un passage aval (vers le filtre).

La bouche d'aspiration 83 est reliée à une source de dépression par un circuit pneumatique.

D'une façon générale, la bouche d'aspiration peut se trouver sur la trajectoire des particules à leur sortie de l'interface entre le patin et l'organe tournant (disque, tambour, jante..). C'est la dépression ou le débit créés à cet endroit qui contribue à une bonne captation.

Dans d'autres configurations, il peut être prévu un capotage auquel cas la bouche d'aspiration est formée par la sortie de l'espace recouvert par ledit capotage.

Il faut donc comprendre que la présente invention peut être appliquée quel que soit la configuration de la bouche d'aspiration **83.**

Typiquement pour une configuration de frein à disque, il y aura une bouche d'aspiration 83 de chaque côté du disque comme illustré à la figure 1.

La bouche d'aspiration (ou les bouches d'aspiration selon les cas) est reliée à un filtre **2** par une conduite fluide appelé ici premier conduit **3**, comme ceci est exemplifié à la figure 2. Le premier conduit **3** peut être formé comme une tuyauterie sans exclure un passage sous forme de tunnel au travers d'une pièce (par exemple le corps de l'étrier). Le premier conduit peut présenter une longueur plus ou moins importante, cette longueur peut aller de quelques dizaines de centimètres, par exemple 50 cm, jusqu'à plusieurs mètres dans une configuration de filtrage centralisé comme il est illustré à la figure 3.

D'une façon générale, la liaison fluidique entre la bouche d'aspiration et le filtre 2 peut comprendre une ou plusieurs dérivations, des raccords en T, en Y etc. Le terme de circuit pneumatique peut également être utilisé pour désigner les conduites fluides/tuyau d'air.

La liaison fluidique entre la bouche d'aspiration et 1e filtre **2** peut comprendre des portions rigides et des portions de conduite souples.

On peut trouver différentes configurations entre les bouches d'aspiration, le filtre et la source de dépression : on peut avoir un filtre pour chaque bouche d'aspiration (configuration décentralisée au maximum), voire pour chaque paire de bouches d'aspiration (Fig 2), mais on peut aussi avoir un seul filtre pour une pluralité de paires de bouches d'aspiration (Fig 3) (configuration dite centralisée), voire un seul filtre pour l'ensemble de véhicule. Ce choix peut être dicté par le type de véhicule, la durée de vie nécessaire pour le filtre avant colmatage, les diverses contraintes d'implantation dans le véhicule, etc.

Sur les figures, on a représenté une configuration en dépression, avec le filtre interposé entre le premier conduit 3 et la source de dépression 1 qui aspire les particules au travers du filtre que se trouve alors en dépression par rapport à la pression ambiante extérieure. Toutefois, dans une configuration non représentée, la source de dépression peut être interposée entre le premier conduit et le filtre, auquel cas la turbine aspire les particules puis la turbine les souffle dans le filtre (filtre en surpression au lieu de dépression).

Le filtre **2** peut, dans un exemple type de réalisation, comprendre un média filtrant, de type papier ou autre, laissant passer l'air et piégeant les petites particules contenues dans le flux en provenance des bouches d'aspiration.

Le terme 'filtre' doit être compris ici largement, ce terme comprend des solutions de filtre centrifuge (type 'cyclone'), des solutions de filtre à technique de piégeage électromagnétique, des solutions de filtre à technique de piégeage électrostatique. Le terme 'filtre' inclut aussi une solution où les particules sont dirigées vers un filtre déjà existant comme le filtre à air habitacle ou vers le filtre du pot catalytique.

Le filtre à particules **2** est configuré pour filtrer de l'air provenant des bouches d'aspiration incluant des particules solides présentant des dimensions micrométriques ou millimétriques, c'est-à-dire laisser l'air traverser le média filtrant alors que les particules ne traversent pas le média filtrant et y sont piégées.

Dans l'exemple illustré, la source de dépression **1** est formée par une turbine d'aspiration **10** entraînée par un moteur électrique **11.**

Dans l'exemple illustré, la turbine avec son moteur électrique forme une entité distincte du filtre. Dans ces conditions, il est prévu une seconde conduite fluide pneumatique **30** pour relier la turbine au filtre. Selon des configurations de véhicule et de l'aspect centralisé ou non de la solution, la longueur des tuyauteries peut être plus ou moins longue. Plus la tuyauterie est longue, plus le volume d'air présent dans la tuyauterie est important et plus le temps de réponse pour obtenir une dépression souhaitée peut s'allonger, ce qui renforce l'intérêt de la solution présentée ci-dessous.

Il faut noter qu'une configuration avec la turbine et le filtre dans une seule entité est également possible, dans ce cas il n'y a pas de seconde conduite pneumatique.

Le système d'aspiration comprend en outre une unité de commande **6** configurée pour piloter la turbine. La turbine en question peut être commandée dans un mode tout ou rien par l'unité de commande, par exemple via un relais de commande.

La tension continue utilisée pour alimenter le moteur peut dépendre du domaine d'application du système d'aspiration des particules, par exemple 12 Volts sur des véhicules automobiles classiques, 24 Volts sur des véhicules poids-lourds ou industriels de type camions ou autocars, ou encore 72 Volts sur du matériel ferroviaire (tramway, train).

Selon une réalisation particulière, l'unité de commande 6 peut être capable de générer un signal de commande pour commander la vitesse du moteur, on peut prévoir que la logique de commande fasse appel à un signal modulé PWM (modulation de largeur d'impulsion).

Il faut noter ici qu'en lieu et place d'une turbine d'aspiration, la source de dépression peut être préexistante sur le véhicule, notamment pour le cas du domaine automobile une source de dépression induite par le fonctionnement du moteur du véhicule par exemple en dérivation de l'admission d'air, ou bien en autre exemple par l'utilisation d'un effet Venturi sur un flux de gaz sortant par exemple les gaz d'échappement. Pour le cas du domaine ferroviaire, la source de dépression peut être dérivée de l'équipement pneumatique de freinage ou d'un autre équipement auxiliaire du véhicule ferroviaire en question.

Afin d'aspirer les particules de freinage issu de l'abrasion, on fait régner à l'intérieur du premier conduit **3** une valeur de dépression souhaitée.

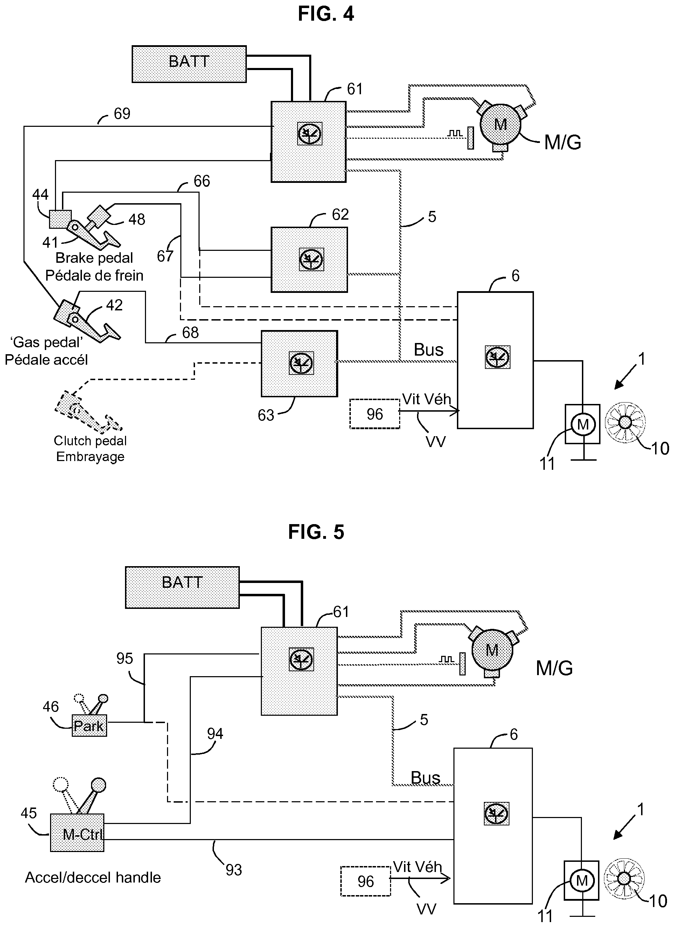

Comme visible à la figure 4, l'unité de commande **6** reçoit des informations en provenance d'autres unités présentes à bord du véhicule.

Tout d'abord, dans le contexte d'un véhicule hybride, le système du véhicule comprend une chaîne de traction avec un moteur électrique et une batterie **BATT** et aussi un moteur thermique. La batterie est souvent une batterie de puissance BATT capable de faire avancer le véhicule sans intervention du moteur thermique (zéro émission de combustion). Dans le contexte d'un véhicule électrique pur, la batterie de puissance BATT est la seule source d'énergie il n'y a pas de moteur thermique.

Il y a donc une machine électrique noté **M/G.** Une telle machine électrique est reliée aux roues du véhicule, d'une façon ou d'une autre, plus ou moins directement. Une telle machine électrique peut être pilotée comme un moteur électrique ou peut être piloté comme une génératrice électrique selon les configurations d'utilisation.

La puissance d'une telle machine électrique peut aller de 1 kW à 100 kilowatts, suivant que l'on parle de configuration micro hybride (boost électrique et freinage, récupératif) pour les faibles puissances électriques mises en jeu, ou que l'on parle de configuration « full hybrid » avec mode zéro émission de combustion aux basses vitesses (et bien entendu freinage récupératif) pour les puissances moyennes, et pour finir pour les puissances les plus élevées s'agissant des configurations de véhicules dédiés au mode électrique pur (le cas échéant avec un prolongateur d'autonomie).

On note que dans tous les cas de figure ci-dessus, la machine électrique peut être pilotée comme une génératrice en mode récupération d'énergie ce qui correspond à une phase de freinage récupératif. Par conséquent, il est légitime de parler d'une chaîne de traction-freinage du véhicule.

Il est prévu un calculateur de commande **61** pour commander la machine électrique. Pour parler de la machine électrique en question, on peut aussi utiliser le terme « moteur-générateur » M/G. La machine électrique peut être formée comme un alterno-démarreur agencé comme un accessoire du moteur ou comme un accessoire de la transmission.

Le pilotage en puissance ou en couple de la machine électrique, soit en mode moteur soit en mode génératrice, est connu en soi donc non décrit en détail ici. On retient tout de même que le calculateur de commande de la machine électrique est capable de délivrer une information représentative de l'activation d'un mode de freinage récupératif sur la machine électrique. L'utilisation de cette information sera décrite plus bas. On utilise aussi le terme « freinage électromagnétique » pour désigner le freinage récupératif.

Le système comprend en outre une pédale de frein **41** destinée à être actionnée par un conducteur du véhicule. Dans certaines configurations, il y a simplement un interrupteur binaire tout ou rien **48** en interaction avec la pédale de frein **41.** Cet interrupteur peut délivrer une information **67** directement à l'unité de commande **6** du système d'aspiration. Dans une autre réalisation d'un interrupteur **68** est relié à une unité de commande **62** de la fonction freinage par exemple celle qui gère la fonction ABS, et qui va transmettre une ou plusieurs informations via un bus multiplexé **5** à l'unité de commande 6 de l'aspiration (une liaison filaire n'est pas non plus exclue).

Selon une autre configuration, il peut être prévu une information plus riche, de type analogique ou numérique, reflétant précisément la position courante de la pédale de frein ce qui permet à l'unité de commande **6** de connaître d'une part l'intensité de freinage et d'autre part de pouvoir agir très précocement dès le début de l'action de l'utilisateur ou du conducteur sur la pédale de frein. Dans ce cas, il est prévu un potentiomètre **44** analogique ou numérisé, qui délivre une information riche **66** à destination de l'unité de commande **6** du système d'aspiration, directement (ligne pointillée) ou via l'unité de commande **62** de la fonction freinage.

Selon une autre configuration, l'actionneur de freinage peut être tout autre type de pédale ou un manipulateur selon le type de matériel ou véhicules concernés (automobile ferroviaire etc.).

Outre la pédale de frein, dans l'exemple illustré à la figure 4, il est prévu une pédale d'accélérateur **42** comme connu en soi. La pédale d'accélérateur peut délivrer un signal électrique analogique ou numérique représentatif de la position courante de la pédale sur une course autorisée de la pédale d'accélération. L'information de position courante est délivrée, dans le cadre d'un véhicule hybride, à la fois à un calculateur de contrôle moteur **63** du moteur thermique et au calculateur de commande **61** de la machine électrique via les liaisons **69, 68.** Bien entendu, l'information de pédale d'accélération pourrait être délivrée à un seul calculateur qui propagerait l'information aux autres calculateurs par le bus multiplexé **5.**

L'unité de commande 6 est configurée pour prendre en compte un lever rapide de pied de la pédale d'accélérateur pour ainsi anticiper une phase de freinage d'urgence pour laquelle l'intervention du freinage à friction doit être faite le plus tôt possible.

L'unité de commande 6 est configurée pour prendre en compte des signaux de commande pilotant les injecteurs de carburant du moteur thermique. Ainsi, une diminution du temps de commande des injecteurs reflète d'une autre façon un lever de pied rapide et donc une probabilité substantielle d'un freinage subséquent et on active alors de manière anticipée l'activation du système d'aspiration des particules de freinage.

Les différents calculateurs mis en jeu, **6,61,62,63** peuvent typiquement communiquer entre eux par un bus multiplexé de type CAN fiable et rapide.

L'unité de commande **6** utilise aussi l'information vitesse véhicule courante **VV.** Celle-ci peut être délivrée par un capteur spécifique ou être mis à disposition par un des calculateurs embarqués **96.**

Selon une autre configuration, notamment illustrée à la figure 5, le système comprend un manipulateur **45** qui sert pour commander à la fois l'accélération et la décélération. Cette configuration est typique du matériel ferroviaire. Le manipulateur est relié au calculateur de commande **61** de traction par la liaison **94** multiplexée ou non manipulateur est relié à l'unité de commande **6** d'aspiration par la liaison **93** multiplexée ou non.

Par exemple lorsque le conducteur pousse la manette **45** vers l'avant, il provoque une commande en moteur (couple positif) de la machine électrique (ou des machines électriques), avec une commande vers l'avant, alors qu'à l'inverse lorsque le conducteur tire la manette **45** vers l'arrière, il provoque une commande en couple négatif c'est-à-dire en mode génératrice pour freiner le véhicule.

Le système peut comporter en outre un actionneur auxiliaire **46** de commande pour activer ou relâcher un frein de parking. Ce frein de parking peut aussi être utilisé comme un frein de service ou frein de secours dans certaines configurations, par la liaison **95.** Si tel est le cas, une liaison filaire reliant cet actionneur à l'unité de commande **6** peut être prévue pour également être pris en compte dans la logique de commande.

Les autres éléments représentés sur la figure 5 sont identiques ou similaires à ceux décrits pour la figure 4.

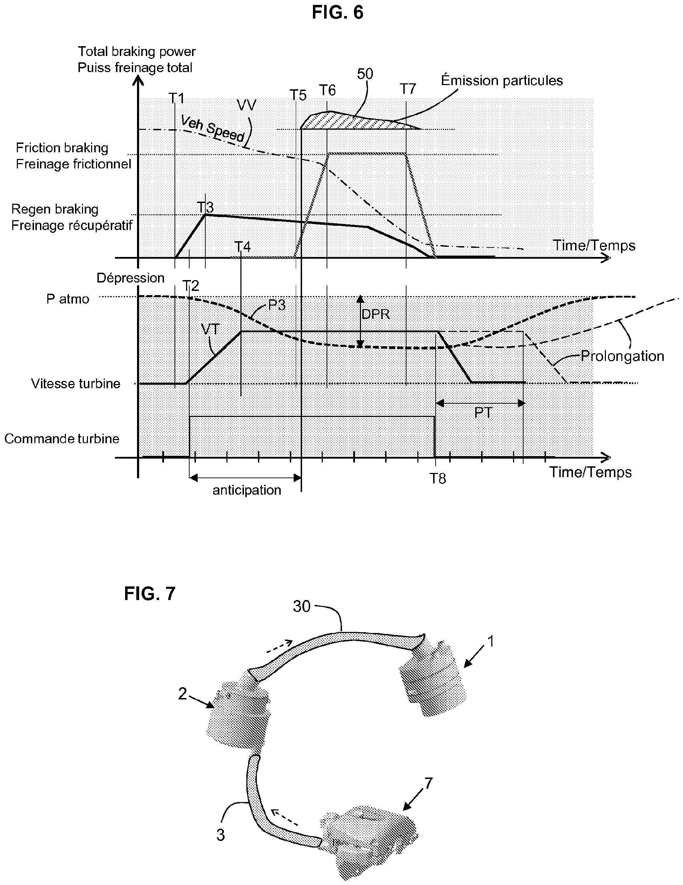

La figure 6 illustre à l'aide d'un de chronogramme un exemple de logique de fonctionnement et de procédé de commande associé.

À l'instant **T1,** le conducteur appuie sur la pédale de frein (ou respectivement tire le manipulateur) ce qui provoque l'activation d'une phase de freinage récupératif c'est-à-dire d'un pilotage de la machine électrique en mode génératrice. Cette information étant transmise en temps réel vers l'unité de commande 6 des moyens d'aspiration, la commande de la turbine d'aspiration est alors commandée à l'instant **T2.** À partir de ce moment, on constate que la pression régnant dans le premier conduit et la bouche d'aspiration notée **P3** diminue (la courbe s'écarte de la pression atmosphérique vers le bas). À ce moment, pour autant, le freinage à friction n'a pas encore commencé ; c'est ainsi à juste titre que l'on peut dénommer cette logique une commande anticipée de l'aspiration. L'instant **T3** correspond au maximum du freinage électromagnétique.

À l'instant **T4**, la turbine a atteint sa vitesse de consigne et la pression P3 continue à diminuer pour rejoindre un niveau de dépression cible noté DPR.

La valeur de dépression de consigne prédéterminée DPR est choisie dans une plage de 20 à 40 millibars en dessous de la pression ambiante.

L'instant **T5** correspond au début de la phase de freinage à friction,

L'instant **T6** correspond au moment de freinage à friction atteint sa puissance nominale.

La zone hachurée repérée **50** est représentative de la quantité des particules relâchées par l'abrasion entre le patin et l'organe tournant.

Étant donné qu'à l'instant **T5**, la dépression a atteint la valeur cible DPR, l'efficacité de l'aspiration est maximale dès le début de l'émission des particules.

L'instant **T7** correspond au début du relâchement de la pédale de frein 41.

L'instant **T8** correspond à l'interruption de la commande de la turbine.

La courbe notée **P3** représente la pression régnant à l'intérieur du premier conduit 3 c'est-à-dire substantiellement la pression d'aspiration appliquée à la bouche d'aspiration **83.**

La courbe illustrant la vitesse véhicule montre que le freinage électromagnétique est d'autant plus efficace que la vitesse courante est élevée, la courbe montre aussi que le freinage à friction produit un taux de décélération plus élevé que le freinage électromagnétique.

Selon une option possible, il est prévu une temporisation de prolongation (notée **PT**) de la commande d'activation de la turbine au-delà de l'instant **T8** où le freinage a effectivement cessé

Exprimée sous une autre forme, l'unité de commande **6** met en oeuvre un procédé comprenant au moins les actions suivantes :
- recevoir une ou plusieurs informations émanant d'un calculateur de commande d'un moteur-générateur d'un dispositif de traction-freinage du véhicule,
- établir des conditions de commande anticipée de 1a source de dépression, en fonction au moins d'un signal de freinage électromagnétique,
- piloter la source de dépression en fonction des conditions de commande anticipée.

La logique de commande peut faire intervenir en outre d'autres sources d'information.

Par exemple, l'information de la vitesse véhicule **VV** peut être utilisée pour éviter d'activer le système d'aspiration lorsque le la vitesse du véhicule est nulle ou reste nulle.

L'unité de commande peut être en outre configurée pour prendre en compte des informations en provenance d'un système de reconnaissance d'environnement, qui peut comprendre des caméras, des lidars, notamment à fonctionnalité de détections d'obstacles, dans le cadre de dispositifs d'aide à la conduite et de délégation de conduite.

Selon un autre exemple, il est prévu de prolonger l'activation de la turbine après la phase effective de freinage pendant un temps prédéterminé qui peut être soit fixe soit un paramètre lié à une calibration (prolongation PT fixe ou issu de calibration).

Selon un autre exemple, l'unité de commande est en outre configurée pour prendre en compte une cartographie contenant des zones à probabilité de freinage élevé, et/ou des zones de descente longue, par exemple route de col de montagne prise en descendant.

Selon un autre exemple, l'unité de commande est en outre configurée pour prendre en compte un flux d'informations issu d'un calculateur de freinage électrodynamique en charge du pilotage d'un système auxiliaire de freinage de type électrodynamique, par exemple un ralentisseur, système que l'on trouve fréquemment sur des véhicules poids-lourds.

Pour fixer les ordres de grandeur, la puissance consommée par la turbine 10 et son moteur électrique 11 peuvent aller de une trentaine de watts jusqu'à plus d'un kilowatt, en pratique cette puissance peut être comprise dans un intervalle [30W - 800W] selon le nombre de bouches d'aspiration à desservir et aussi selon la longueur des tuyauteries qui génèrent une légère perte de charge.

Dans une configuration, la vitesse de la turbine peut aller de 0 à 12 000 tr/s.

Dans une configuration, la vitesse de la turbine peut aller de 0 à 30 000 tr/s.

Le temps de réponse de la turbine pour aller de zéro à la vitesse de consigne peut être typiquement compris entre 100 ms et 700 ms, le plus souvent pour les applications automobiles entre 400 ms et 600 ms.

Sur la figure 3, nous trouvons un filtre centralisé, un capteur de pression centralisé, et des canalisations ou tuyauteries **31, 32, 33, 34** qui permettent de relier chacune des bouches d'aspiration **83** au filtre **2.**

On remarque qu'il peut y avoir plusieurs filtres desservis par une même turbine.

Il faut remarquer que l'astuce de l'anticipation peut également être appliquée sur des machines stationnaires telles que des éoliennes ou des machines industrielles afin de freiner un rotor à partir d'informations de commande qui précèdent l'application effective du freinage à friction. Ces informations d'anticipation peuvent être obtenues d'un calculateur de commande d'une machine électrique pilotant le rotor en mode moteur ou en mode génératrice.

## Revendications

1. Système d'aspiration des particules de freinage d'un système de freinage à friction de véhicule, dans un véhicule hybride ou électrique, le système d'aspiration comprenant:
au moins une source de dépression (1), au moins une bouche d'aspiration (83) reliée par un circuit pneumatique (3,30) à la source de dépression, une unité de commande (6) configurée pour commander la source de dépression,
**caractérisé en ce que** le système d'aspiration comprend en outre un flux d'informations issu d'un calculateur de commande (61) d'un moteur-générateur d'un dispositif de traction-freinage du véhicule,
et dans lequel l'unité de commande est configurée pour piloter la source dépression de manière anticipée par rapport à l'activation effective du freinage à friction, l'unité de commande pilotant la source de dépression au moins en fonction de l'activation d'un freinage électromagnétique.

2. Système selon la revendication 1, comprenant en outre au moins un filtre (2) pour collecter les particules aspirées.

3. Système selon la revendication 2, dans lequel le circuit pneumatique comprend un premier conduit (3) reliant la bouche d'aspiration au filtre, le filtre (2) interposé entre le premier conduit (3) et la source de dépression (1).

4. Système selon l'une des revendications 1 à 3, dans lequel la source de dépression est formée par une turbine (10) entrainée par un moteur électrique (11).

5. Système selon l'une des revendications 1 à 4, dans lequel le système d'aspiration comprend en outre un flux d'informations issu d'un calculateur de freinage électrodynamique, et l'unité de commande est configurée pour piloter la source de dépression en fonction de l'activation d'un freinage électrodynamique.

6. Système selon l'une des revendications 1 à 5, dans lequel il est prévu au moins un second conduit (30) reliant le filtre à la source de dépression, de préférence dans une configuration centralisée, à savoir un filtre et une turbine étant reliés à au moins quatre bouches d'aspiration.

7. Procédé pour piloter un système d'aspiration des particules de freinage à friction d'un système de freinage d'un véhicule, le système d'aspiration comprenant:
au moins une source de dépression, au moins une bouche d'aspiration (83), au moins un circuit pneumatique (3,30) reliant la bouche d'aspiration à la source de dépression, et une unité de commande (6) configurée pour mettre en oeuvre les étapes :
- recevoir une ou plusieurs informations émanant d'un calculateur de commande d'un moteur-générateur d'un dispositif de traction-freinage du véhicule,
- établir des conditions de commande anticipée de la source de dépression, en fonction au moins d'un signal de freinage électromagnétique,
- piloter la source de dépression en fonction des conditions de commande anticipée.

8. Procédé selon la revendication 7, dans lequel l'unité de commande est en outre configurée pour recevoir une ou plusieurs informations émanant d'un système de commande de freinage à friction du véhicule.

9. Procédé selon l'une des revendications 7 à 8, dans lequel l'unité de commande est en outre configurée pour prendre en compte un lever rapide de pied de la pédale d'accélérateur.

10. Procédé selon l'une des revendications 7 à 9, dans lequel l'unité de commande est en outre configurée pour recevoir une information de vitesse courante du véhicule, de manière à pouvoir diminuer ou interrompre le pilotage de la turbine dans le cas où le véhicule est à vitesse nulle.

11. Procédé selon l'une des revendications 7 à 10, dans lequel l'unité de commande est en outre configurée pour prolonger l'activation du système d'aspiration d'une temporisation prédéterminée après l'un des événements parmi le relâchement du frein à friction ou l'arrêt du véhicule vitesse (vitesse nulle maintenue).

12. Procédé selon l'une des revendications 7 à 11, dans lequel l'unité de commande est en outre configurée pour prendre en compte une cartographie contenant des zones à probabilité de freinage élevé, et/ou des zones de descente longue.

## Patentansprüche

1. System zum Absaugen von Bremspartikeln eines Reibungsbremssystems eines Fahrzeugs in einem Hybrid- oder Elektrofahrzeug, wobei das Absaugsystem umfasst:
wenigstens eine Unterdruckquelle (1), wenigstens eine Saugöffnung (83), die über eine pneumatische Schaltung (3, 30) mit der Unterdruckquelle verbunden ist, eine Steuereinheit (6), die dazu ausgebildet ist, die Unterdruckquelle zu steuern,
**dadurch gekennzeichnet, dass** das Ansaugsystem ferner einen Informationsfluss von einem Steuerrechner (61) eines Motor-Generators einer Traktions-Brems-Vorrichtung des Fahrzeugs umfasst,
und wobei die Steuereinheit dazu ausgebildet ist, die Unterdruckquelle im Vorgriff auf die tatsächliche Aktivierung der Reibungsbremse anzusteuern, wobei die Steuereinheit die Unterdruckquelle wenigstens in Abhängigkeit von der Aktivierung einer elektromagnetischen Bremsung ansteuert.

2. System nach Anspruch 1, ferner umfassend wenigstens einen Filter (2) zum Sammeln der angesaugten Partikel.

3. System nach Anspruch 2, wobei der pneumatische Kreislauf eine erste Leitung (3) umfasst, die die Saugöffnung mit dem Filter verbindet, wobei der Filter (2) zwischen der ersten Leitung (3) und der Unterdruckquelle (1) liegt.

4. System nach einem der Ansprüche 1 bis 3, wobei die Unterdruckquelle durch eine Turbine (10) gebildet wird, die von einem Elektromotor (11) angetrieben wird.

5. System nach einem der Ansprüche 1 bis 4, wobei das Ansaugsystem ferner einen Informationsfluss von einem elektrodynamischen Bremssteuerrechner umfasst und die Steuereinheit dazu ausgebildet ist, die Unterdruckquelle in Abhängigkeit von der Aktivierung einer elektrodynamischen Bremsung anzusteuern.

6. System nach einem der Ansprüche 1 bis 5, wobei wenigstens eine zweite Leitung (30) vorgesehen ist, die den Filter mit der Unterdruckquelle verbindet, bevorzugt in einer zentralisierten Konfiguration, d.h. wobei ein Filter und eine Turbine mit wenigstens vier Ansaugöffnungen verbunden sind.

7. Verfahren zum Steuern eines Systems zum Ansaugen von Reibungsbremspartikeln aus einem Fahrzeugbremssystem, wobei das Ansaugsystem Folgendes umfasst:
wenigstens eine Unterdruckquelle, wenigstens eine Ansaugöffnung (83), wenigstens eine pneumatische Schaltung (3, 30), die die Ansaugöffnung mit der Unterdruckquelle verbindet, und eine Steuereinheit (6), die dazu ausgebildet ist, die folgenden Schritte auszuführen:
- Empfangen einer oder mehrerer Informationen von einem Steuerrechner für einen Motor-Generator einer Traktions-Bremsvorrichtung des Fahrzeugs,
- Festlegen der Bedingungen für eine vorausschauende Steuerung der Unterdruckquelle in Abhängigkeit von wenigstens einem elektromagnetischen Bremssignal,
- Ansteuern der Unterdruckquelle in Abhängigkeit von den vorausschauenden Steuerbedingungen.

8. Verfahren nach Anspruch 7, wobei die Steuereinheit zusätzlich dazu ausgebildet ist, eine oder mehrere Informationen von einem Reibungsbremssteuersystem des Fahrzeugs zu empfangen.

9. Verfahren nach einem der Ansprüche 7 oder 8, wobei die Steuereinheit ferner dazu ausgebildet ist, ein schnelles Anheben des Fußes vom Gaspedal zu berücksichtigen.

10. Verfahren nach einem der Ansprüche 7 bis 9, wobei die Steuereinheit ferner dazu ausgebildet ist, eine Information über die aktuelle Geschwindigkeit des Fahrzeugs zu empfangen, so dass sie die Turbinensteuerung verringern oder unterbrechen kann, wenn das Fahrzeug eine Geschwindigkeit von Null hat.

11. Verfahren nach einem der Ansprüche 7 bis 10, wobei die Steuereinheit ferner dazu ausgebildet ist, die Aktivierung des Saugsystems nach einem Ereignis aus dem Lösen der Reibungsbremse oder dem Anhalten des Fahrzeugs um eine vorbestimmte Zeit zu verlängern (beibehaltene Nullgeschwindigkeit).

12. Verfahren nach einem der Ansprüche 7 bis 11, wobei die Steuereinheit ferner dazu ausgebildet ist, eine Kartographie zu berücksichtigen, die Bereiche mit hoher Bremswahrscheinlichkeit und/oder Bereiche mit langer Talfahrt enthält.

## Claims

1. System for suctioning braking particles from a friction braking system of a vehicle, in a hybrid or electric vehicle, the suction system comprising: at least one negative-pressure source (1), at least one suction mouth (83) connected by a pneumatic circuit (3,30) to the negative-pressure source, and a control unit (6) configured to control the negative-pressure source,
**characterized in that** the suction system further comprises a stream of information originating from a computer (61) that controls a motor-generator of a driving/braking system of the vehicle,
and wherein the control unit is configured to control the negative-pressure source preemptively before the actual activation of the friction braking, the control unit controlling the negative-pressure source at least as a function of the activation of electromagnetic braking.

2. System according to claim 1, further comprising at least one filter (2) to collect the suctioned particles.

3. System according to claim 2, wherein the pneumatic circuit comprises a first conduit (3) connecting the suction mouth to the filter, the filter (2) interposed between the first conduit (3) and the negative-pressure source (1).

4. System according to one of claims 1 to 3, wherein the negative-pressure source is formed by a turbine (10) driven by an electric motor (11).

5. System according to one of claims 1 to 4, wherein the suction system further comprises a stream of information originating from an electrodynamic braking computer, and the control unit is configured to control the negative-pressure source according to activation of an electrodynamic braking.

6. System according to one of claims 1 to 5, wherein there is provided at least a second conduit (30) connecting the filter to the negative-pressure source, preferably in a centralized configuration, namely a filter and a turbine being connected to at least four suction mouths.

7. Method for controlling a system for suctioning friction braking particles from a braking system of a vehicle, the suction system comprising:
at least one negative-pressure source, at least one suction mouth (83), at least one pneumatic circuit (3,30) connecting the suction mouth to the negative-pressure source, and a control unit (6) configured to implement the steps of:
- receiving one or more items of information from a computer that controls a motor-generator of a driving/braking system of the vehicle,
- establishing conditions for preemptive control of the negative-pressure source, as a function of at least one electromagnetic braking signal,
- controlling the negative-pressure source according to the conditions for preemptive control.

8. Method according to claim 7, wherein the control unit is further configured to receive one or more items of information from a friction braking control system of the vehicle.

9. Method according to one of claims 7 to 8, wherein the control unit is further configured to take into account a rapid release of the foot from the accelerator pedal.

10. Method according to one of claims 7 to 9, wherein the control unit is further configured to receive information on the current speed of the vehicle, so as to be able to reduce or discontinue the controlling of the turbine in the event that the vehicle is at zero speed.

11. Method according to one of claims 7 to 10, wherein the control unit is further configured to extend the activation of the suction system by a predetermined time after one of the following events: release of the friction brake or stopping of the vehicle speed (zero speed maintained).

12. Method according to one of claims 7 to 11, wherein the control unit is further configured to take into account a map containing areas with a high probability of braking, and/or areas of long descent.
